# EUROPEAN PATENT SPECIFICATION

(11) **EP 3 556 894 B1**
(45) Date of publication and mention of the grant of the patent: **20.04.2022**
(21) Application number: 17883450.3
(22) Date of filing: 07.12.2017
(51) Int. Cl.: C22C 38/38, C22C 38/02, C22C 38/06, C22C 38/00, C22C 38/28, C22C 38/26, C22C 38/32, C21D 8/02, C21D 6/00, C23C 2/06, C21D 9/46, C22C 38/22, C22C 38/24, C21D 9/52, C23C 2/02, C23C 2/40, C21D 1/76, C21D 3/04

(54) **ULTRA-HIGH STRENGTH STEEL SHEET HAVING EXCELLENT BENDABILITY AND MANUFACTURING METHOD THEREFOR**
ULTRAHOCHFESTES STAHLBLECH MIT HERVORRAGENDER BIEGBARKEIT UND HERSTELLUNGSVERFAHREN DAFÜR
TÔLE D'ACIER DE RÉSISTANCE ULTRA-ÉLEVÉE PRÉSENTANT UNE EXCELLENTE PLIABILITÉ ET SON PROCÉDÉ DE FABRICATION

(30) Priority: 19.12.2016 KR 20160173552
(43) Date of publication of application: 23.10.2019
(73) Proprietor: Posco, Pohang-si, Gyeongsangbuk-do 37859 (KR)
(72) Inventor: KOO, Min-Seo, Gwangyang-si Jeollanam-do 57807 (KR); KIM, Seong-Woo, Gwangyang-si Jeollanam-do 57807 (KR)
(74) Representative: Zech, Stefan Markus
(86) International application number: PCT/KR2017/014332
(87) International publication number: WO 2018/117501

(56) References cited:
- EP-A1- 2 738 280
- EP-A1- 3 085 802
- JP-A- 2006 083 403
- JP-A- 2013 216 946
- JP-A- 2015 117 403
- JP-A- 2015 180 766
- JP-A- 2015 180 766
- KR-A- 20130 106 626
- KR-A- 20150 142 791
- KR-A- 20160 013 155

## Description

### [Technical Field]

The present invention relates to an ultra-high strength steel sheet used as a material of a vehicle, and more particularly, to an ultra-high strength steel sheet having excellent bendability and a method of manufacturing the same.

### [Background Art]

To reduce a weight of a vehicle steel sheet, a thickness of a steel sheet may need to be reduced, whereas, to secure impact stability, a thickness of a steel sheet may need to be increased, or strength may need to be greatly improved, which may be a contradictory aspect.

To address the issue described above, various steel steels for vehicles such as dual phase steel (DP steel), transformation induced plasticity steel (TRIP steel), complex phase steel (CP steel), and the like, known as AHSS (advanced high strength steel), have been developed.

The strength of such high strength steels may further increase by increasing an amount of carbon or adding alloy components, but in consideration of a practical aspect such as spot weldability, and the like, there may be a limitation in that implementable tensile strength may be on the approximately 1200MPa level.

Meanwhile, as a steel sheet applicable to a structural member, and the like, to secure impact stability of a vehicle, hot press forming (HPF) steel which may be manufactured by forming at a high temperature and water-cooling, which may secure final strength by rapid cooling through direct contact with a die, has been increasingly used. However, due to excessive facility investment costs and an increase of heat treatment and process costs, the application of the steel may not be easily expanded, which may be a disadvantage.

Accordingly, a roll forming process having high productivity, as compared to the hot press forming, may be used to manufacture a complex shape through multi-stage roll forming, and the method has been increasingly applied with respect to a component forming of an ultra-high strength material having a low elongation rate.

Such steel may be mainly manufactured in a continuous annealing furnace having a water-quenching facility, and a microstructure of steel manufactured therefrom may have a tempered martensite structure formed by tempering martensite. However, during the water-quenching, shape quality may be deteriorated due to a temperature discrepancy between a width direction and a length direction, and when a subsequent roll forming process is applied, the deterioration of workability, a material deviation in each position, and the like, may be caused, which may be a disadvantage.

Thus, research into a measure for substituting for a rapid cooling method through water-cooling has been required.

As an example, reference 1 discloses a cold-rolled steel sheet which may obtain high strength and high ductility at the same time using tempering martensite and which may have an excellent sheet shape after continuous annealing. However, as a content of carbon (C) in an alloy composition is high, 0.2% or higher, there may be a risk of deterioration of weldability, and also a possibility of dents in a furnace caused by the addition of a large amount of Si.

Also, reference 2 discloses martensite steel containing less than 1.5% of Mn in alloy composition to improve bendability, and discloses a method for limiting a gap between inclusions of the steel. In this case, hardenability may be deteriorated due to a low content of alloy elements such that a significantly high cooling speed may be required during cooling, and accordingly, shape quality may be greatly deteriorated.

Reference 3 provides a method of increasing the yield strength of martensite steel. However, the above-described techniques discloses high-alloy-type martensite steel, and the steel may have excellent shape quality as compared to low-alloy-type water-cooled martensite steel, but bending properties, which may be important for improving roll-forming properties and impact properties, may be deteriorated, which may be a disadvantage.

Reference 4 describes a high-strength hot-dip galvanized steel sheet having a TS of 1180 MPa or more.

Thus, a measure for manufacturing an ultra-high strength steel sheet having excellent bending properties may be required to improve roll-forming properties and to improve impact properties at the same time.
(Reference 1) Japanese Laid-Open Patent Publication No. 2010-090432
(Reference 2) Japanese Laid-Open Patent Publication No. 2011-246746
(Reference 3) Korean Patent Publication No. 2014-0030970
(Reference 4) EP3085802A1

### [Disclosure]

### [Technical Problem]

An aspect of the present invention is to provide an ultra-high strength steel sheet having excellent shape and bending properties such that a weight of a vehicle may be reduced and also impact properties may improve, and a method of manufacturing the same.

### [Technical Solution]

The solution to the technical problem above is provided in claims 1 to 7.

### [Advantageous Effects]

According to an aspect of the present invention, using a continuous annealing furnace without water-quenching facilities, a steel sheet which may secure tensile strength of 1200MPa or higher as compared to conventional ultra-high strength martensite steel and may have excellent shape and bending properties at the same time, which may be an effect of the present invention

### [Description of Drawings]

FIG. 1 is graphs of changes in concentration of C of a surface layer region of inventive example 1-1 and comparative example 1-1 to which a continuous annealing heat treatment is performed depending on whether a dew point temperature is controlled according to an example embodiment of the present invention; and
FIG. 2 is images of a cross-sectional structure of a surface layer region of inventive example 1-1 and of comparative example 1-1 to which a continuous annealing heat treatment is performed according to an example embodiment of the present invention.

### [Best Mode for Invention]

The inventors have conducted research on a measure for resolving the problem in which, in the case of ultra-high strength martensite steel manufactured using conventional water-quenching, a hot-dip zinc plating process may not be easily performed due to an oxide layer formed on a surface of steel after annealing and cooling, and for having ultra-high strength and securing excellent shape and bending properties at the same time.

As a result, when martensite steel is manufactured using a continuous annealing facility capable of roll-cooling, mist-cooling, gas-cooling, and the like, a facility capable of slow-cooling rather than water-quenching, and by optimizing steel element composition, it has been found that a steel sheet having ultra-high strength and also having excellent shape and bending properties may be manufactured, and the present disclosure has been suggested.

Particularly, in the present invention, when manufacturing martensite steel, a surface layer of a steel sheet may be formed as a soft phase by optimizing an annealing heat treatment condition, thereby greatly improving bending properties, which may be a technical feature of the present invention.

Hereinafter, the present invention will be described in detail.

An ultra-high strength steel sheet having excellent bendability, an aspect of the present invention, includes, by wt%, 0.12 to 0.2% of C, 0.5% or less of Si (excluding 0%), 2.5 to 4.0% of Mn, 0.03% or less of P (excluding 0%), 0.015% or less of S (excluding 0%), 0.1% or less of Al (excluding 0%), 1.0% or less of Cr (excluding 0%), 0.01% or less of N (excluding 0%) .

In the description below, the reason why an alloy element composition of the ultra-high strength steel sheet provided in the present invention is limited as above will be described in detail. A content of each element may be represented by wt% unless otherwise indicated.

### C: 0.12 to 0.2%

Carbon (C) is an essential element for securing strength of steel. Particularly, to secure ultra-high strength, it may be preferable to add 0.12% or higher of C. However, when a content of C exceeds 0.2%, there may be the problem of deterioration of weldability, and thus, an upper limit content of C is 0.2%.

Thus, in the present invention, a content of C is controlled to be 0.12 to 0.2%. A preferable content of C may be 0.13 to 0.18%.

### Si: 0.5% or less (excluding 0%)

Silicon (Si) is a ferrite stabilization element. Si may have a disadvantage in that Si may weaken strength of steel by facilitating the formation of ferrite during cooling (in this case, the cooling is slow-cooling) after annealing in a continuous annealing furnace in which a slow-cooling section is present. Also, when a large amount of Mn is added to prevent phase transformation as in the present invention, there may be a risk of a dent defect caused by surface concentration and oxidation by Si during annealing. Thus, the content of Si is 0.5% or less.

Thus, in the present invention, the content of Si is controlled to be 0.5% or less, and in consideration of an inevitably added level during a manufacturing process, 0% may be excluded.

### Mn: 2.5 to 4.0%

Mangenese (Mn) is an element which may prevent the formation of ferrite and may easily cause the formation of austenite. When a content of Mn is lower than 2.5%, there may be a problem in which the formation of ferrite may easily be caused during slow-cooling. When a content of Mn exceeds 4.0%, there may be problems in which a band may be formed by segregation, and the excessive content of Mn may become a cause of increasing raw material costs of alloy iron due to excessive addition of alloy during a converter operation.

Thus, in the present invention, the content of Mn is limited to 2.5 to 4.0%. A preferable content of Mn may be 2.8% or higher, and a more preferable content of Mn may be 3.0% or higher.

### P: 0.03% or less (excluding 0%)

Phosphorous (P) is an impurity element in steel. When a content of P exceeds 0.03%, weldability may degrade, a possibility of brittleness of steel may increase, and a possibility of a dent defect may also increase. Thus, an upper limit content is 0.03%. However, in consideration of an inevitably added level during a manufacturing process of steel, 0% may be excluded.

### S: 0.015% or less (excluding 0%)

Sulfur (S) is an impurity element in steel similarly to P, and is known as an element which may deteriorate ductility and weldability of steel. When a content of S exceeds 0.015%, a possibility of deterioration of ductility and weldability of steel may increase. Thus, an upper limit content of S is 0.015%. However, in consideration of an inevitably added level during a manufacturing process of steel, 0% may be excluded.

### Al: 0.1% or less (excluding 0%)

Aluminum (Al) is an element which may expand a ferrite region. When a continuous annealing process including slow-cooling is used as in the present invention, Al may facilitate the formation of ferrite, which may be a disadvantage of Al. Also, Al may deteriorate high temperature hot-rolling properties by forming AlN, and thus, an upper limit content of Al is 0.1%. However, in consideration of an inevitably added level during a manufacturing process of steel, 0% may be excluded.

### Cr: 1.0% or less (excluding 0%)

Chromium (Cr) is an element which may easily secure a low temperature transformation structure by preventing ferrite transformation. Thus, Cr may have an advantageous effect of preventing the formation of ferrite during cooling. However, when a content of Cr exceeds 1.0%, there may be the problem in which raw material costs of alloy iron may increase due to excessive addition of alloy.

Thus, an upper limit content of Cr is 1.0%, and 0% may be excluded. Preferably, it may be advantageous to include 0.1 to 1.0% of Cr.

### N: 0.01% or less (excluding 0%)

When a content of N exceeds 0.01%, a risk of cracks during continuous casting may greatly increase by the formation of AlN, and thus, an upper limit content of N is 0.01%. However, in consideration of an inevitably added level during a manufacturing process of steel, 0% may be excluded.

The steel sheet of the present invention may further include the element as below in addition to the above-described elements to further improve properties of steel.

### B: 0.005% or less (excluding 0%)

Boron (B) is an element which may have an effect of preventing the formation of ferrite. In the present invention, B may be useful to prevent the formation of ferrite during cooling after annealing. However, when a content of B exceeds 0.005%, there may be the problem in which the formation of ferrite may rather be facilitated by precipitation of Fe₂₃ (C,B)₆.

Thus, in the present disclosure, it may be preferable to control a content of B to be 0.005% or less, and 0% may be excluded.

### Mo: 0.1% or less (excluding 0%)

Molybdenum (Mo) is an element which may have an effect of preventing the formation of ferrite by increasing hardenability of steel. In the present invention, Mo may be useful to prevent the formation of ferrite during cooling after annealing. However, when a content of Mo exceeds 0.1%, there may be the problem in which raw material costs of alloy iron may increase due to excessive addition of alloy.

Thus, in the present invention, it may be preferable to control a content of Mo to be 0.1% or less, and 0% may be excluded.

### Ti: 0.1% or less (excluding 0%)

Titanium (Ti) is a nitride formation element. Ti may perform scavenging by precipitating N in steel to TiN such that the precipitation of AlN may be prevented, and Ti may thus have an effect of decreasing a risk of cracks during continuous casting. It may have preferable to add 48/14*[N(weight%)] or higher of Ti by chemical equivalent. However, when a content of Ti exceeds 0.1%, there may be the problem of degradation of strength of steel by carbide precipitation in addition to removal of solute N, and the content may thus not be preferable.

Thus, when Ti is added, it may be preferable to control an upper limit content of Ti to be 0.1%, and 0% may be excluded.

### Nb: 0.1% or less (excluding 0%)

Niobium (Nb) is an element which may be segregated to an austenite grain boundary and may prevent an austenite grain from being coarse during an annealing heat treatment. When a content of Nb exceeds 0.1%, there may be the problem in which raw material costs of alloy iron may increase due to excessive addition of alloy.

Thus, when Nb is added, it may be preferable to control an upper limit content of Nb to be 0.1%, and 0% may be excluded.

### Zr: 0.1% or less (excluding 0%)

Zirconium (Zr) is a nitride formation element, and Zr may perform scavenging by precipitating N in steel to ZrN such that the precipitation of AlN may be prevented, and Zr may thus have an effect of decreasing a risk of cracks during continuous casting. It may be preferable to add 91/14*[N(weight%)] or higher of Zr by chemical equivalent. However, when a content of Zr exceeds 0.1%, there may be the problem of degradation of strength of steel by carbide precipitation in addition to removal of solute N, and the content may thus not be preferable.

Thus, when Zr is added, it may be preferable to control an upper limit content of Zr to be 0.1%, and 0% may be excluded.

### V: 0.1% or less (excluding 0%)

Vanadium (V) is a nitride formation element, and V may perform scavenging by precipitating N in steel to VN such that the precipitation of AlN may be prevented, and V may thus have an effect of decreasing a risk of cracks during continuous casting. It may have preferable to add 51/14*[N(weight%)] or higher of V by chemical equivalent. However, when a content of V exceeds 0.1%, there may be the problem of degradation of strength of steel by carbide precipitation in addition to removal of solute N, and the content may thus not be preferable.

Thus, when V is added, it may be preferable to control an upper limit content of V to be 0.1%, and 0% may be excluded.

A remainder other than the above-described composition is Fe. However, in a general manufacturing process, inevitable impurities may be inevitably added from raw materials or a surrounding environment, and thus, impurities may not be excluded. A person skilled in the art may be aware of the impurities, and thus, the descriptions of the impurities may not be provided in the present invention.

The ultra-high strength steel sheet satisfying the above-described alloy composition may include a microstructure configured as below preferably.

Specifically, a microstructure of a surface layer region (a portion within 45 µm in a thickness direction from a surface) of the ultra-high strength steel sheet of the present disclosure includes ferrite of 50 to 70% by area fraction and residual martensite, and a microstructure of a remaining region (may be referred to as a center region) other than the surface layer region includes martensite of 95% or higher and bainite and ferrite of 5% or lower by area fraction preferably.

Although described in the description below later, in the present invention, during annealing in a continuous annealing facility including a facility capable of slow-cooling, by optimizing conditions thereof and by decarburization of a surface of the steel sheet, a soft phase may be formed on the surface layer region of the steel sheet.

When a fraction of a ferrite phase on the surface layer region is lower than 50%, bendability may be deteriorated such that cracks may be created during a bending process. When a fraction of the ferrite phase exceeds 70%, a fraction of a martensite phase may be relatively low, such that strength may excessively decrease, which may be a problem.

As described above, it may be preferable to form 0.12% or lower (excluding 0%) of carbon (C) in the surface layer region by decarburization of a surface of the steel sheet. When a content of C in the surface layer region exceeds 0.12%, it may be impossible to secure a sufficient fraction of a soft phase in the surface layer region, and the content may thus not be preferable.

A remaining region other than the surface layer region, may include a martensite phase, a hard phase, as a main phase preferably. When a fraction of a martensite phase is lower than 95%, there may be the problem in which it may be difficult to secure ultra-high strength, tensile strength of 1200MPa or higher, which is target strength of the present invention.

When the surface layer region and the remaining region other than the surface layer region include a martensite phase in the present invention, a martensite phase may further include a tempered martensite phase. In this case, it may be preferable to control a sum of a martensite phase and a tempered martensite phase to satisfy a target area fraction.

The steel sheet of the present invention satisfying both of the alloy composition and the microstructure as described above has tensile strength of 1200MPa or higher and a bendability index (R/t) of 4 or lower, and thus secures ultra-high strength and excellent bendability at the same time. The steel sheet of the present invention may be a cold-rolled steel sheet or a hot-dip galvanized steel sheet.

R in the bendability index may be R of a punch during 90 degrees bending, and t may indicate a thickness (mm) of a material.

In the description below, a method of manufacturing an ultra-high strength steel sheet having excellent bendability, another aspect of the present invention, will be described in detail.

The ultra-high strength steel sheet according to the present invention may be manufactured through processes of reheating, hot-rolling, coiling, cold-rolling, annealing, and cooling a steel slab satisfying the alloy composition suggested in the present invention

. In the description below, conditions of each process will be described in detail.

### [Reheating Steel Slab]

In the present invention, a steel slab is homogenized by reheating the steel slab before performing a hot-rolling process, the reheating process is performed at 1100 to 1300°C.

When the reheating temperature is lower than 1100°C, there may be the problem of an excessive increase of a weight during a subsequent hot-rolling process. When the temperature exceeds 1300°C, the amount of surface scale may increase, which may lead to loss of a material, and may thus not be preferable.

### [Hot-Rolling]

The reheated steel slab is hot-rolled and manufactured as a hot-rolled steel sheet. A finish-hot-rolling is performed at a temperature of Ar3 or higher and 1000°C or lower.

When a temperature during the finish-hot-rolling is lower than Ar3 (a temperature at which austenite is transformed to ferrite during cooling), a ferrite + austenite two-phase region or a ferrite region rolling may be performed such that a duplex grain structure may be formed, and a miss-operation may occur due to change in hot-rolling weight, which may not be preferable. When the finish-hot-rolling temperature exceeds 1000°C, a possibility of a surface defect caused by scale may increase, which may not be preferable.

### [Coiling]

The hot-rolled steel sheet manufactured as above is coiled at 720°C or lower.

When a temperature during the coiling exceeds 720°C, an oxide film may be excessively formed on a surface of the steel sheet and may cause a defect. Thus, an upper limit thereof is 720°C. The lower the coiling temperature, the higher the strength of the hot-rolled steel sheet may be such that a rolling weight of a subsequent cold-rolling process may increase, which may be a disadvantage, but it may not be a cause for failing an actual production. Thus, a lower limit thereof will not be particularly limited. However, to easily perform a subsequent cold-rolling process, it may be preferable to perform the coiling at Ms (a martensite transformation initiating temperature) or higher.

### [Cold-Rolling and Annealing Heat Treatment]

The coiled hot-rolled steel sheet is pickled and cold-rolled, and an annealing heat treatment is performed in a continuous annealing furnace without a water quenching device, that is, in a continuous annealing furnace including a slow-cooling section, preferably.

The cold-rolling is a process for securing a thickness required by a customer, and a reduction ratio in the cold-rolling may not be particularly limited. Generally, a lower limit of a cold press reduction ratio may be determined in consideration of recrystallization during a subsequent annealing process, but in the present invention, as an austenite single phase annealing may be performed at Ac3 or higher during the annealing, the lower limit may not be particularly limited.

The annealing heat treatment is performed at a temperature of Ac3 (a temperature in which ferrite is transformed to an austenite single phase when a temperature increases) or higher preferably, which may be to secure 100% of an austenite fraction during the annealing. Meanwhile, it may be metallurgically preferable to limit an upper limit of the temperature during the annealing heat treatment up to a temperature before liquid appears. However, to prevent the deterioration of durability of the continuous annealing furnace, substantially, an upper limit of the annealing heat treatment is 900°C.

When the annealing heat treatment is performed at the above-mentioned temperature range, a dew point temperature in the continuous annealing furnace is controlled to be -10 to 30°C. The process may be to form a soft structure, preferably a 50 to 70% of ferrite phase by area fraction, on a surface layer region of the ultra-high strength steel sheet by decarburization of the surface layer region, the ultra-high strength steel sheet manufactured by a series of processes of the present invention . When the dew point temperature exceeds 30°C, the formation of a decarburized layer may become excessive on a surface layer such that there may be a risk of degradation of strength. When the dew point temperature is lower than -10°C, the formation of a decarburized layer may rather be prevented on a surface layer such that it may be difficult to form a sufficient area fraction of a soft phase, and consequently, there may be the problem of difficulty in improving bendability.

By performing the annealing heat treatment under the condition in which the heat treatment temperature and the dew point temperature are controlled, a content of carbon (C) in the surface layer region after the annealing heat treatment may decrease to 0.12% or lower.

Also, in the present invention, by controlling a dew point temperature of an atmospheric gas during the annealing heat treatment and by forming a soft structure through decarburization of the surface layer region (a portion within 40 µm in a thickness direction from a surface) of the steel sheet, bending properties which may be deteriorated by adding a large amount of alloy elements such as Mn, and the like, may be improved, and thus, bending properties of the manufactured ultra-high strength steel sheet may further be improved.

In other words, when the concentration of C in the surface layer region of the steel sheet is the same or exceeds the concentration of added C, a bendability index (R/t), an index which may examine bending properties, may exceeds 4 and bending properties may be deteriorated. However, in the present embodiment of the invention, by decreasing the concentration of C of the surface layer region to 0.12% or less, it may be possible to secure the bendability index (R/t) of 4 or lower. This is because cracks may be prevented during a bending process as a soft structure is formed by decarburization of the surface layer region of the steel sheet.

Meanwhile, the lower the bendability index (R/t), the more excellent the bending formability may be.

### [Cooling]

A slow-cooling is performed to room temperature at a cooling rate of 100°C/s or lower after the annealing heat treatment preferably.

When a conventional water-quenching is performed, a cooling rate may exceeds 100°C/s such that a temperature discrepancy between a width direction and a length direction may increase, and sheet shape quality may be greatly deteriorated. Accordingly, there may be the problem in which a wave height (a difference in height of a steel sheet in every 1000mm) may become 10mm or greater. Also, it has been known that, even when a cooling rate is secured to a 200°C/s level by strongly applying mist-cooling, a wave height may become a several mm level due to a temperature discrepancy between a width direction and a length direction.

Accordingly, in the present invention, the cooling speed is limited to 100°C/s or lower (excluding 0°C/s) to secure shape quality of the steel.

As an example, in the cooling, the steel sheet may be slow-cooled to a temperature range of 600 to 700°C at a cooling rate of 10°C/s or lower and may be cooled to an overaging heat treatment temperature (a general condition) at a cooling rate of 30°C/s or lower. Thereafter, an overaging heat treatment may be performed, and a final cooling may be performed to 150°C or lower.

As described above, to secure strength at a slow cooling rate as compared to a conventional cooling, hardenability of steel may be secured by adding a large amount of Mn, and by additionally adding alloy elements such as B, Mo, Cr, and the like, higher hardenability may be secured.

In the present invention, the cold-rolled steel sheet manufactured through the processes above may be heated to 450°C or higher and may be submerged in a zinc plating bath, or may be submerged in a zinc plating bath at a temperature of the steel sheet of 450°C or higher during cooling after annealing, thereby manufacturing a hot-dip galvanized steel sheet having a hot-dip galvanized layer.

Meanwhile, to include a tempered martensite phase in the surface layer region and a remaining region other than the surface layer region of the cold-rolled steel sheet or the hot-dip galvanized steel sheet manufactured as above, a BAF process (bath annealing furnace process) may further be performed on a material which has been passed through an annealing process and/or a hot-dip zinc plating line in a continuous annealing line. In the BAF process, a heat treatment may be performed at a temperature range of 150 to 250°C for 17 to 24 hours preferably, thereby further improving yield strength.

In the description below, an example embodiment of the present invention will be described in greater detail. It should be noted that the exemplary embodiments are provided to describe the present invention in greater detail, and to not limit the present invention . The scope of right of the present invention is determined by the appended claims.

### [Mode for Invention]

### (Embodiment)

Steel having an element composition as in Table 1 was vacuum-dissolved to be an ingot of a weight of 34kg, was maintained at 1200°C for 1 hour, was finish-rolled at 900°C, was charged to a furnace heated in advance to 680°C and maintained for 1 hour, and was furnace-cooled, thereby simulating a hot-rolling coiling process. The steel was pickled and 50%-cold-rolled and manufactured as a cold-rolled steel sheet. Thereafter, an annealing heat treatment was performed on the cold-rolled steel sheet at 820°C for simulating a continuous annealing process, and the cold-rolled steel sheet was slow-cooled to 650°C at a cooling rate of 3°C/s, and was cooled to 440°C at a general cooling rate of 20°C/s. Then, an overeaging heat treatment was performed on the cold-rolled steel sheet for 360 seconds, and the cold-rolled steel sheet was cooled to room temperature at a cooling rate of 3°C/s, thereby simulating a continuous annealing process.

When simulating a continuous annealing hot-dip plating process, an annealing heat treatment was performed on a cold-rolled steel sheet manufactured by pickling and cold-rolling at 820°C, the cold-rolled steel sheet was slow-cooled to 650°C at a cooling rate of 3°C/s and was cooled to 560°C at a cooling rate of 6°C/s, and an overaging heat treatment was performed. Thereafter, a hot-dip zinc plating process was performed by submerging the cold-rolled steel sheet in a hot-dip plating port of 460°C, and a cooling process was performed to room temperature at a cooling rate of 3°C/s.

A dew point temperature condition during the annealing heat treatment was controlled as in Table 2 below.

Mechanical properties of the samples to which the above-described heat treatment was performed were measured, and the results were listed in Table 2.

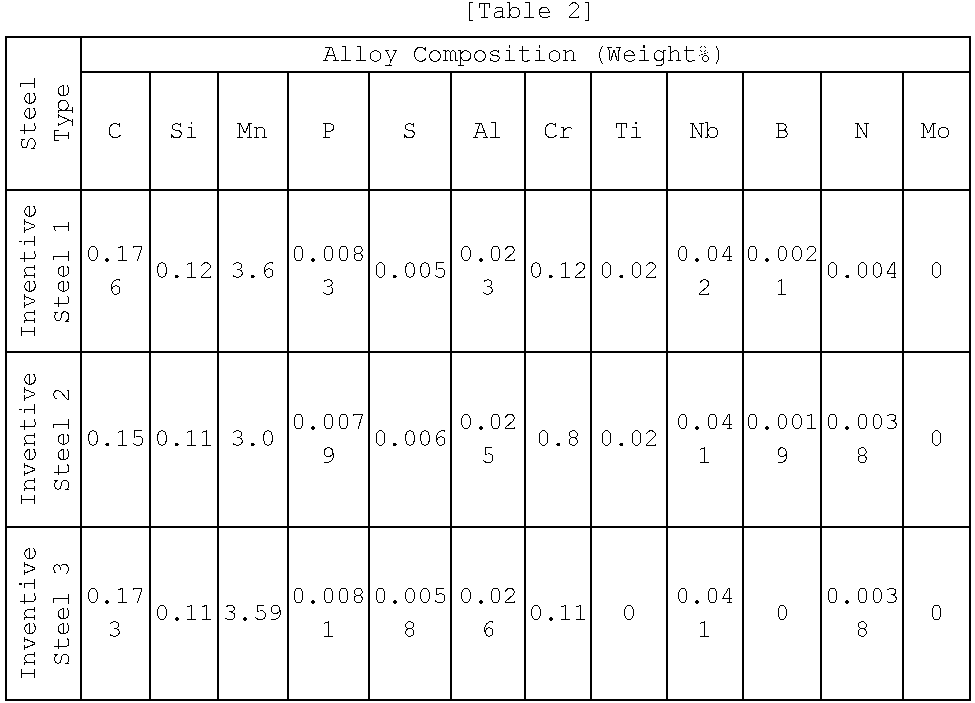

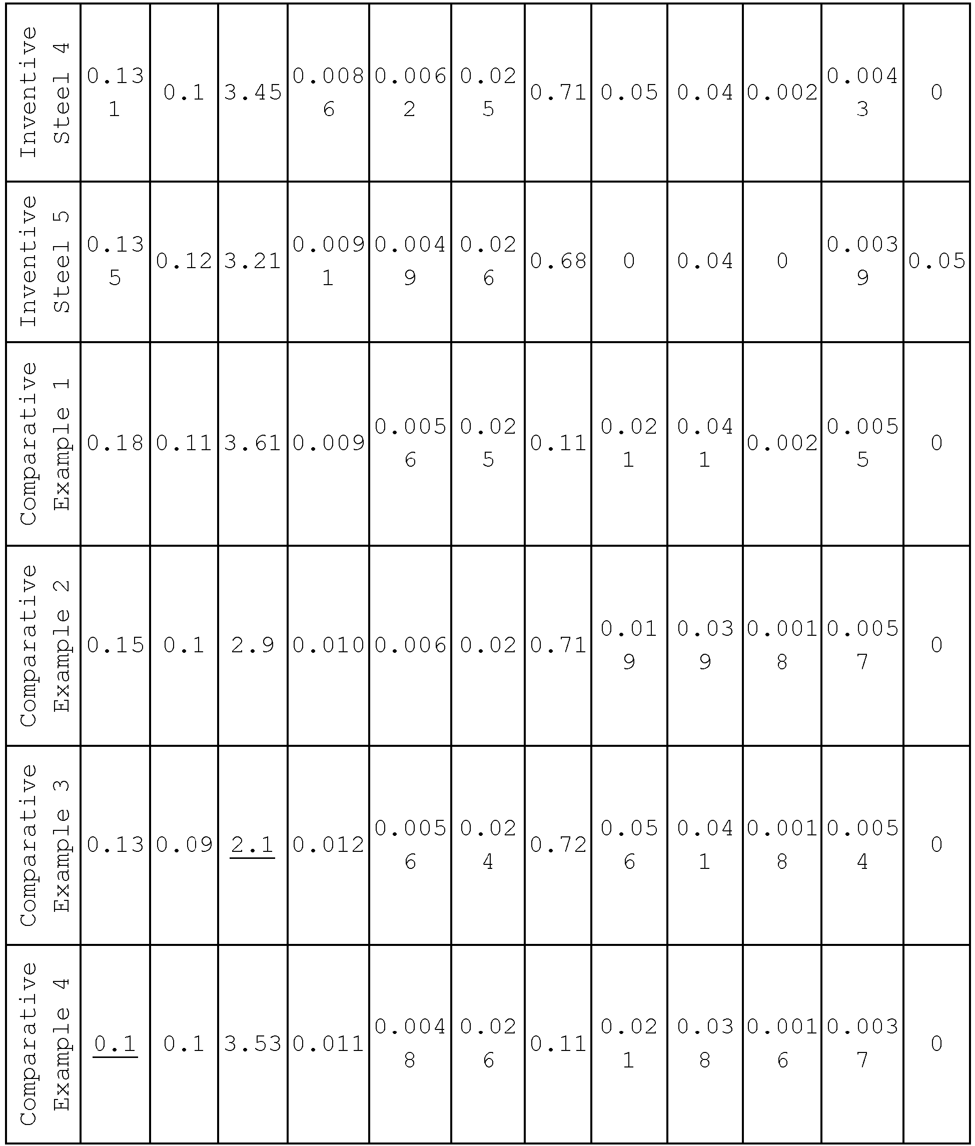

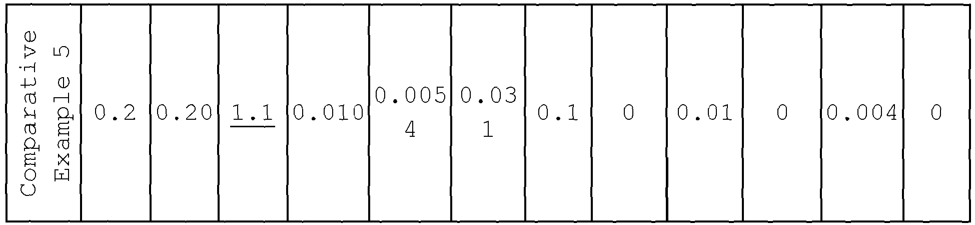

(In Table 1, in comparative steels 1 and 2, the alloy compositions satisfied the ranges suggested in the present invention but the manufacturing conditions did not satisfy the present invention, and thus, the steels were indicated as comparative steels.)

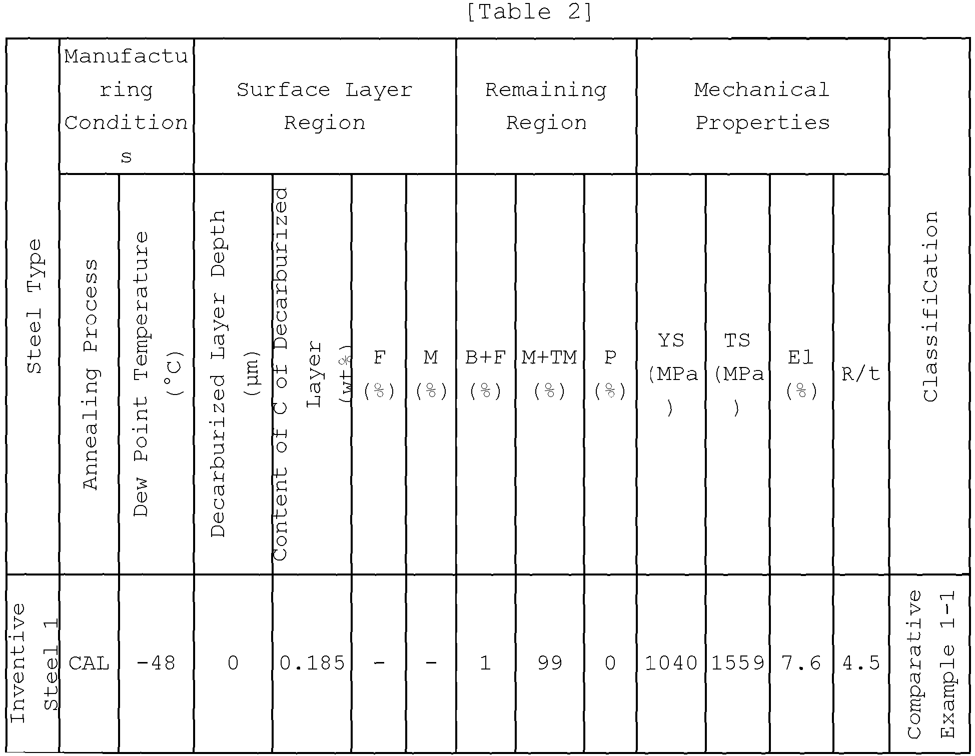

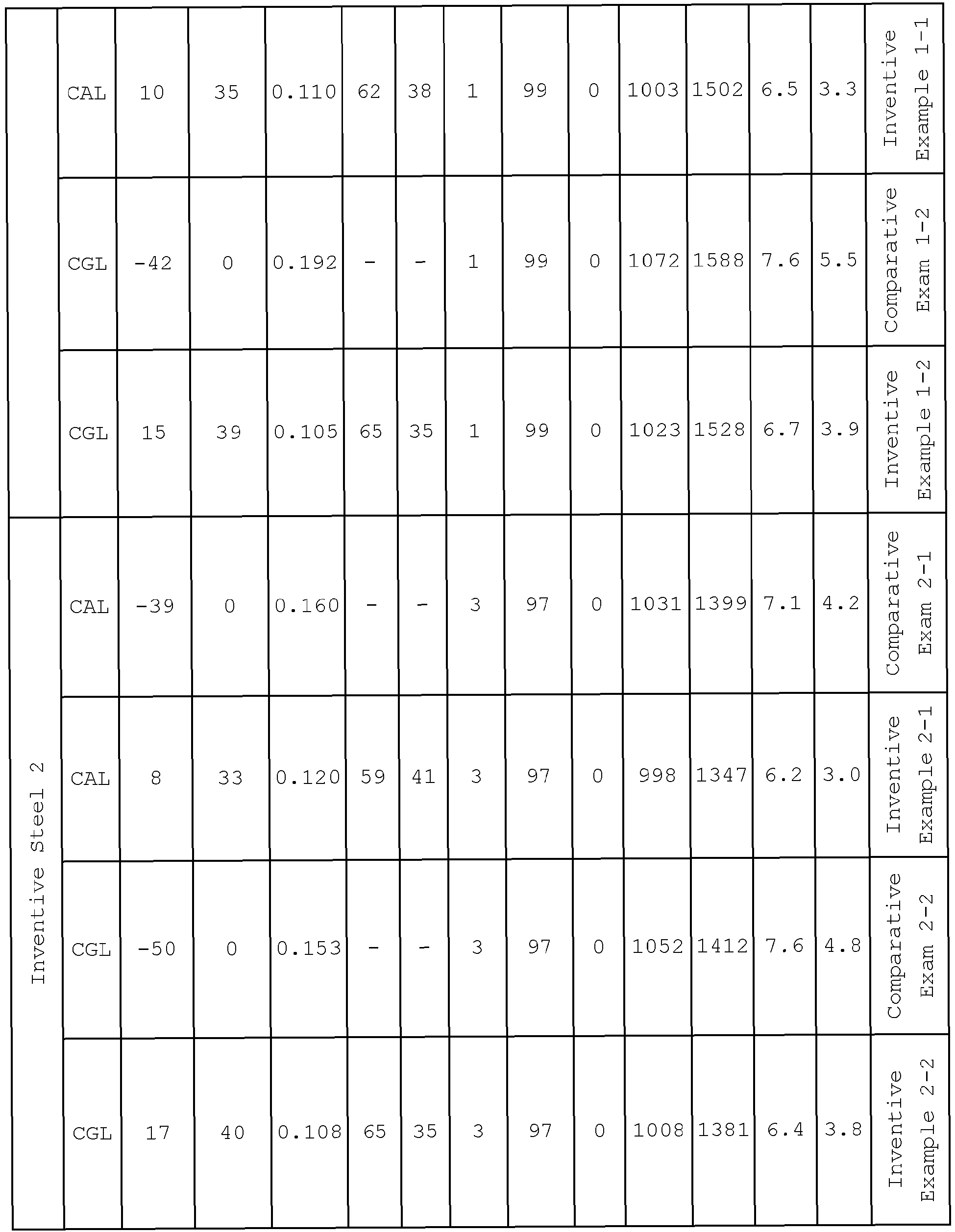

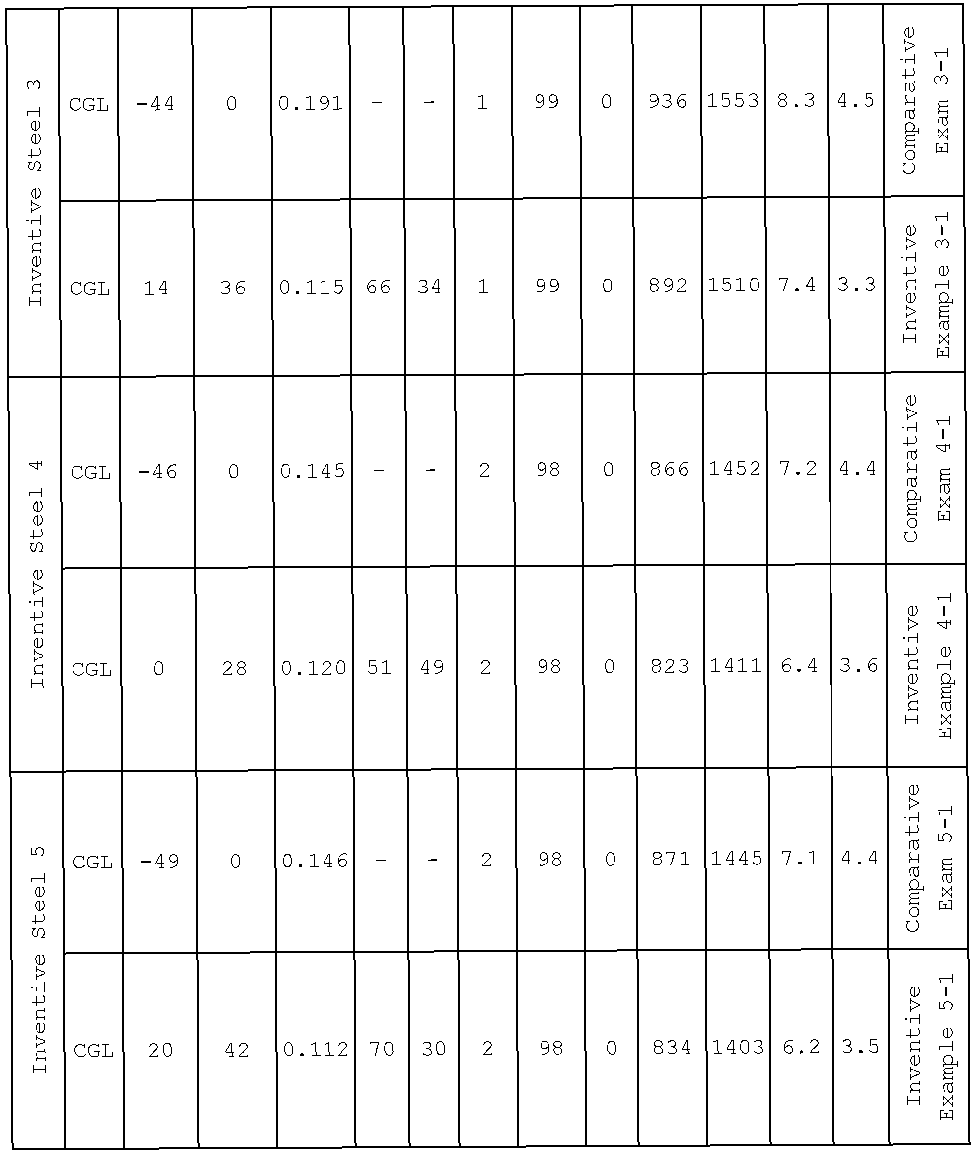

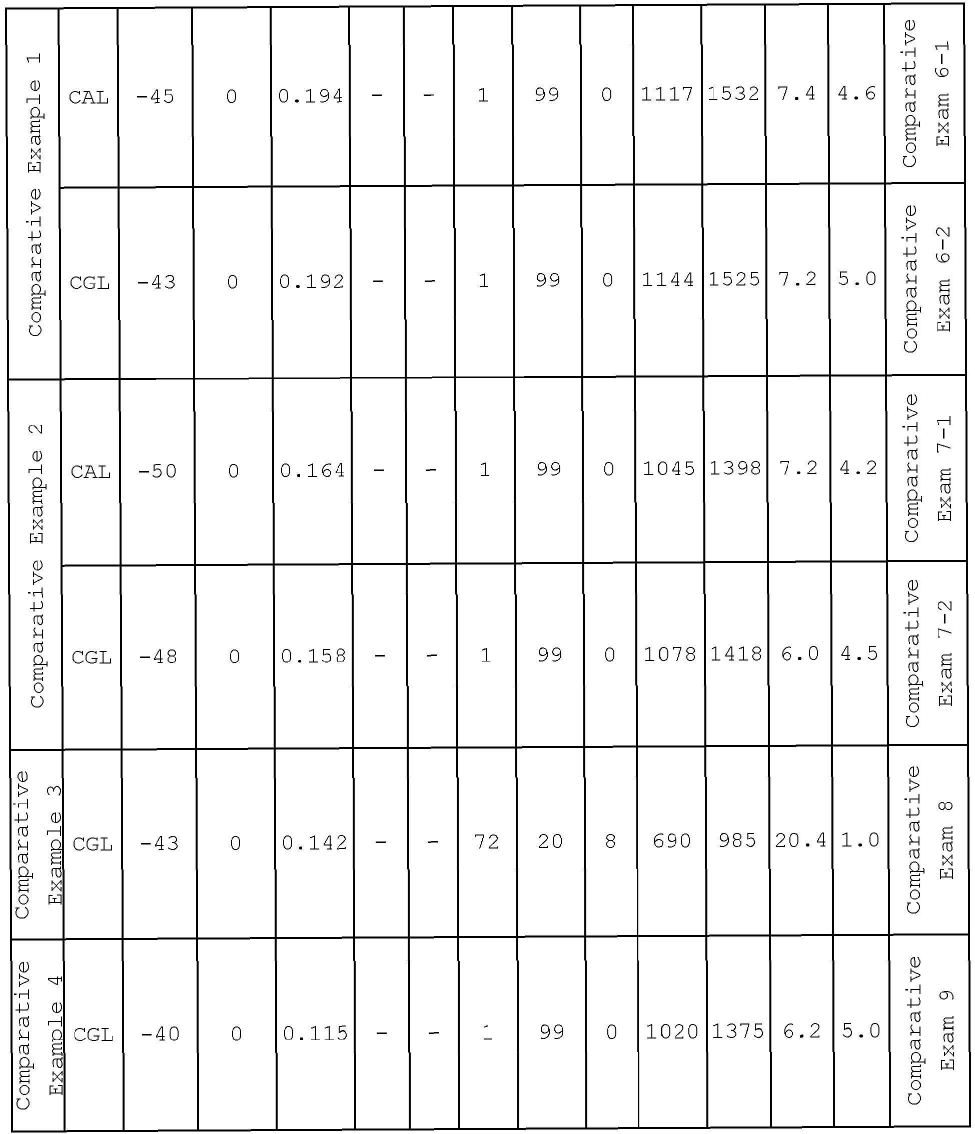

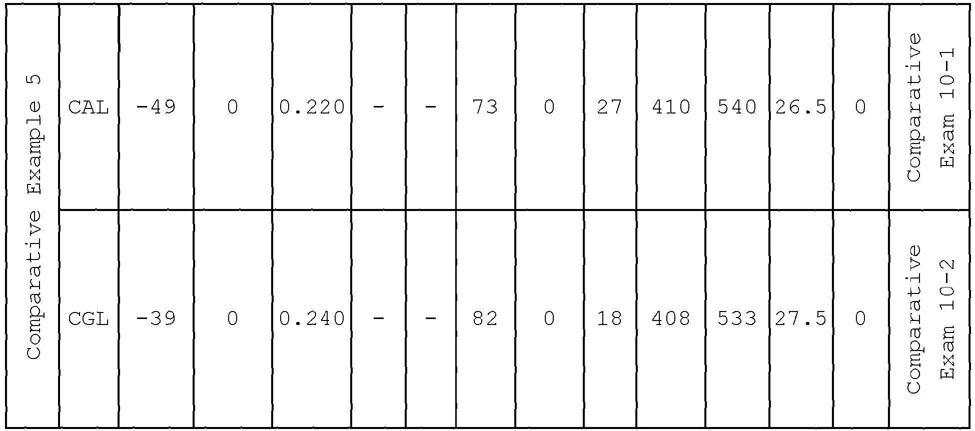

(In Table 2, CAL indicates a continuous annealing line, and CGL indicates continuous galvanizing line.

Also, F is ferrite, B is bainite, M is martensite, TM is tempered martensite, and P is pearlite.

Also, YS is yield strength, TS is tensile strength, an El is an elongation rate.)

As indicated in Tables 1 and 2, as for inventive example 1-1 to inventive example 5-1 satisfying both of the alloy composition and the manufacturing conditions of the present invention, as a decarburized layer was formed on a surface layer region (up to a maximum of 42 µm in a thickness direction from a surface), bendability index (R/t) were 4 or lower, and bending properties were thus excellent. Also, a matrix structure of the steel sheet was mainly formed as a martensite phase, and ultra-high strength, tensile strength of 1200MPa or higher, was secured.

As for comparative example 1-1 to comparative example 7-2 of which the alloy compositions satisfied the present invention but the dew point temperatures during annealing did not satisfy the conditions of the present invention, a decarburized layer was not formed at all, and accordingly, bending properties were deteriorated.

As for comparative example 8, comparative example 10-1, and comparative example 10-2 of which the alloy compositions and the manufacturing conditions did not satisfy the present invention, a matrix structure was not formed as martensite + tempered martensite such that it was not possible to secure ultra-high strength. This is because a matrix structure of the steel sheet was formed as a complex structure, not a hard structure.

As for comparative example 9, as a decarburized layer was not formed, bending properties were deteriorated.

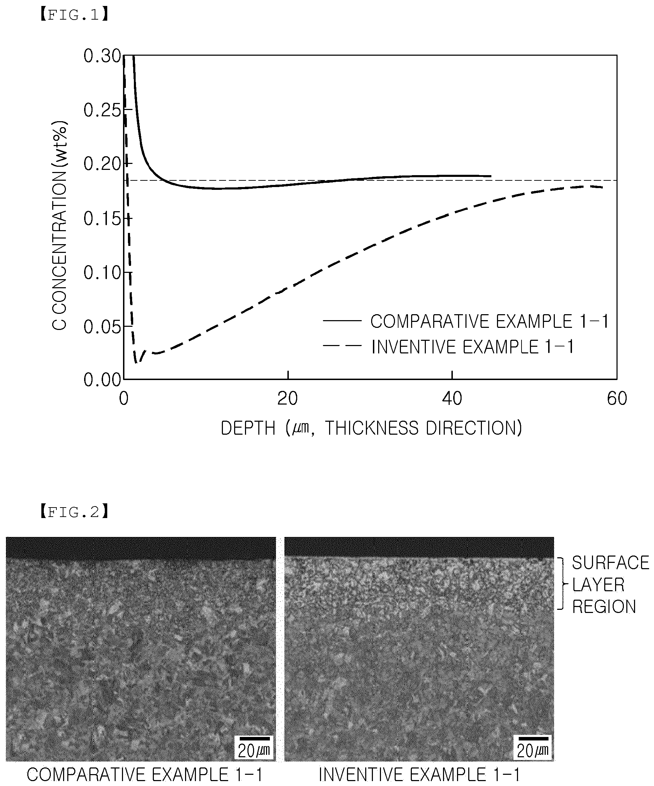

FIG. 1 is graphs of changes in concentration of C of a surface layer region depending on whether a dew point is controlled. As indicated in FIG. 1, the concentration of C of the surface layer region of inventive example 1-1 was lower than that of comparative example 1-1.

FIG. 2 is images of a cross-sectional structure of a surface layer region of inventive example 1-1 and of comparative example 1-1. As indicated in FIG. 2, a soft structure (white region) was formed on the surface layer region of inventive example 1-1 as compared to comparative example 1-1.

## Claims

1. An ultra-high strength steel sheet having excellent bendability, comprising:
by wt%, 0.12 to 0.2% of C, 0.5% or less of Si, excluding 0%, 2.5 to 4.0% of Mn, 0.03% or less of P, excluding 0%, 0.015% or less of S, excluding 0%, 0.1% or less of Al, excluding 0%, 1.0% or less of Cr, excluding 0%, 0.01% or less of N, excluding 0%, and a balance of Fe and inevitable impurities,
wherein the steel sheet further optionally comprises, by wt%, one or more of 0.005% or less of B, excluding 0%, 0.1% or less of Mo, excluding 0%, 0.1% or less of Ti, excluding 0%, 0.1% or less of Nb, excluding 0%, 0.1% or less of Zr, excluding 0%, and 0.1% or less of V, excluding 0%,
wherein a microstructure of a surface layer region, a portion within 45 µm in a thickness direction from a surface,
comprises ferrite of 50 to 70% by area fraction and residual martensite, and
wherein a microstructure of a remaining region other than the surface layer region comprises martensite of 95% or higher and bainite and ferrite of 5% or less by area fraction,
wherein the steel sheet has a bendability index, R/t, of 4 or lower, and wherein the steel sheet has tensile strength of 1200MPa or higher.

2. The ultra-high strength steel sheet of claim 1, wherein a content of carbon in the surface layer region of the steel sheet is 0.12% or less, excluding 0%.

3. The ultra-high strength steel sheet of claim 1, wherein the steel sheet is a cold-rolled steel sheet or a galvanized steel sheet.

4. A method of manufacturing an ultra-high strength steel sheet having excellent bendability of claim 1, the method comprising:
reheating a steel slab at a temperature range of 1100 to 1300°C, the steel slab comprising, by wt%, 0.12 to 0.2% of C, 0.5% or less of Si, excluding 0%, 2.5 to 4.0% of Mn, 0.03% or less of P, excluding 0%, 0.015% or less of S, excluding 0%, 0.1% or less of Al, excluding 0%, 1.0% or less of Cr, excluding 0%, 0.01% or less of N, excluding 0%, and a balance of Fe and inevitable impurities;
finish-hot-rolling the reheated steel slab at a temperature range of Ar3 to 1000°C and manufacturing a hot-rolled steel sheet;
coiling the hot-rolled steel sheet at 720°C or lower;
cold-rolling the coiled hot-rolled steel sheet and manufacturing a cold-rolled steel sheet;
performing an annealing heat treatment on the cold-rolled steel sheet at a temperature range of Ac3 to 900°C and at a dew point temperature of -10 to 30°C; and
cooling the cold-rolled steel sheet on which the annealing heat treatment is performed at a cooling rate of 100°C/s or lower, excluding 0°C/s,
wherein the steel slab further optionally comprises, by wt%, one or more of 0.005% or less of B, excluding 0%, 0.1% or less of Mo, excluding 0%, 0.1% or less of Ti, excluding 0%, 0.1% or less of Nb, excluding 0%, 0.1% or less of Zr, excluding 0%, and 0.1% or less of V, excluding 0%,
wherein the steel sheet has a bendability index, R/t, of 4 or lower, and wherein the steel sheet has tensile strength of 1200MPa or higher.

5. The method of claim 4, wherein the coiling is performed at Ms or higher.

6. The method of claim 4, wherein, during the annealing heat treatment, decarburization occurs in a surface layer region, a portion within 45 µm in a thickness direction from a surface of the cold-rolled steel sheet, and after the annealing heat treatment, a content of carbon in the surface layer region of the cold-rolled steel sheet is 0.12% or less.

7. The method of claim 4, wherein the method further comprises forming a hot-dip galvanized layer by submersing the cold-rolled steel sheet in a zinc plating bath after the cooling.

## Patentansprüche

1. Ultrahochfestes Stahlblech mit ausgezeichneter Biegsamkeit, umfassend:
in Gew.-%, 0,12 bis 0,2 % C, 0,5 % oder weniger Si, ausgenommen 0 %, 2,5 bis 4,0 % Mn, 0,03 % oder weniger P, ausgenommen 0 %, 0,015 % oder weniger S, ausgenommen 0 %, 0,1 % oder weniger Al, ausgenommen 0 %, 1,0 % oder weniger Cr, ausgenommen 0 %, 0,01 % oder weniger N, ausgenommen 0 %, und einen Rest aus Fe und unvermeidbaren Verunreinigungen,
wobei das Stahlblech darüber hinaus optional in Gew.-% ein oder mehrere der folgenden Elemente umfasst, 0,005 % oder weniger B, ausgenommen 0 %, 0,1 % oder weniger Mo, ausgenommen 0 %, 0,1 % oder weniger Ti, ausgenommen 0 %, 0,1 % oder weniger Nb, ausgenommen 0 %, 0,1 % oder weniger Zr, ausgenommen 0 %, und 0,1 % oder weniger V, ausgenommen 0 %,
wobei eine Mikrostruktur eines Oberflächenschichtbereichs, eines Abschnitts innerhalb von 45 µm in einer Dickenrichtung ausgehend von einer Oberfläche,
Ferrit im Flächenanteil von 50 bis 70 % und Restmartensit umfasst, und
wobei eine Mikrostruktur eines übrigen Bereichs, bei dem es sich um einen anderen als den Oberflächenschichtbereich handelt, Martensit im Flächenanteil von 95 % oder höher und Bainit und Ferrit im Flächenanteil von 5 % oder weniger umfasst,
wobei das Stahlblech einen Biegsamkeitsindex, R/t, von 4 oder niedriger hat, und wobei das Stahlblech eine Zugfestigkeit von 1200 MPa oder höher hat.

2. Ultrahochfestes Stahlblech nach Anspruch 1, wobei ein Gehalt an Kohlenstoff im Oberflächenschichtbereich des Stahlblechs 0,12 % oder weniger, ausgenommen 0 %, beträgt.

3. Ultrahochfestes Stahlblech nach Anspruch 1, wobei es sich bei dem Stahlblech um ein kaltgewalztes Stahlblech oder ein galvanisiertes Stahlblech handelt.

4. Verfahren zum Herstellen eines ultrafesten Stahlblechs mit ausgezeichneter Biegsamkeit nach Anspruch 1, wobei das Verfahren umfasst:
Wiedererwärmen einer Stahlbramme in einem Temperaturbereich von 1100 bis 1300°C, wobei die Stahlbramme in Gew.-% 0,12 bis 0,2 % C, 0,5 % oder weniger Si, ausgenommen 0 %, 2,5 bis 4,0 % Mn, 0,03 % oder weniger P, ausgenommen 0 %, 0,015 % oder weniger S, ausgenommen 0 %, 0,1 % oder weniger Al, ausgenommen 0 %, 1,0 % oder weniger Cr, ausgenommen 0 %, 0,01 % oder weniger N, ausgenommen 0 %, und einen Rest aus Fe und unvermeidbaren Verunreinigungen umfasst,
Fertigwarmwalzen der wiedererwärmten Stahlbramme in einem Temperaturbereich von Ar3 bis 1000°C und Herstellen eines warmgewalzten Stahlblechs;
Aufwickeln des warmgewalzten Stahlblechs bei 720°C oder niedriger;
Kaltwalzen des aufgewickelten warmgewalzten Stahlblechs und Herstellen eines kaltgewalzten Stahlblechs;
Durchführen einer Glühwärmebehandlung am kaltgewalzten Stahlblech in einem Temperaturbereich von Ac3 bis 900°C und bei einer Taupunkttemperatur von - 10 bis 30°C; und
Abkühlen des kaltgewalzten Stahlblechs, an dem die Glühwärmehandlung durchgeführt wurde, mit einer Abkühlrate von 100°C/s oder niedriger, ausgenommen 0°C/s,
wobei die Stahlbramme darüber hinaus optional in Gew.-% ein oder mehrere der folgenden Elemente umfasst, 0,005 % oder weniger B, ausgenommen 0 %, 0,1 % oder weniger Mo, ausgenommen 0 %, 0,1 % oder weniger Ti, ausgenommen 0 %, 0,1 % oder weniger Nb, ausgenommen 0 %, 0,1 % oder weniger Zr, ausgenommen 0 %, und 0,1 oder weniger V, ausgenommen 0 %,
wobei das Stahlblech einen Biegsamkeitsindex, R/t, von 4 oder niedriger hat, und wobei das Stahlblech eine Zugfestigkeit von 1200 MPa oder höher hat.

5. Verfahren nach Anspruch 4, wobei das Aufwickeln bei Ms oder höher durchgeführt wird.

6. Verfahren nach Anspruch 4, wobei während der Glühwärmebehandlung eine Entkohlung in einem Oberflächenschichtbereich, einem Abschnitt innerhalb von 45 µm in einer Dickenrichtung ausgehend von einer Oberfläche des kaltgewalzten Stahlblechs stattfindet, und nach der Glühwärmebehandlung ein Gehalt an Kohlenstoff im Oberflächenschichtbereich des kaltgewalzten Stahlblechs 0,12 % oder weniger vorliegt.

7. Verfahren nach Anspruch 4, wobei das Verfahren darüber hinaus umfasst, eine feuerverzinkte Schicht auszubilden, indem das kaltgewalzte Stahlblech nach dem Abkühlen in ein Verzinkungsbad eingetaucht wird.

## Revendications

1. Tôle d'acier à résistance ultra-élevée présentant une excellente aptitude au pliage, comprenant :
en % de poids, 0,12 à 0,2 % de C, 0,5 % ou moins de Si, à l'exclusion de 0 %, 2,5 à 4,0 % de Mn, 0,03 % ou moins de P, à l'exclusion de 0 %, 0,015 % ou moins de S, à l'exclusion de 0 %, 0,1 % ou moins d'Al, à l'exclusion de 0 %, 1,0 % ou moins de Cr, à l'exclusion de 0 %, 0,01 % ou moins de N, à l'exclusion de 0 %, et un solde de Fe et d'impuretés inévitables,
sachant que la tôle d'acier comprend en outre facultativement, en % de poids, un ou plusieurs éléments parmi 0,005 % ou moins de B, à l'exclusion de 0 %, 0,1 % ou moins de Mo, à l'exclusion de 0 %, 0,1 % ou moins de Ti, à l'exclusion de 0 %, 0,1 % ou moins de Nb, à l'exclusion de 0 %, 0,1 % ou moins de Zr, à l'exclusion de 0 %, et 0,1 % ou moins de V, à l'exclusion de 0 %,
sachant qu'une microstructure d'une zone de couche de surface, une partie comprise dans 45 µm dans une direction d'épaisseur depuis une surface,
comprend de la ferrite à raison de 50 à 70 % en fraction d'aire et de la martensite résiduelle, et
sachant qu'une microstructure d'une zone restante autre que la zone de couche de surface comprend de la martensite à raison de 95 % ou plus et de la bainite et de la ferrite à raison de 5 % ou moins en fraction d'aire,
sachant que la tôle d'acier présente un indice d'aptitude au pliage, R/t, de 4 ou moins, et sachant que la tôle d'acier présente une résistance à la traction de 1200 MPa ou plus.

2. La tôle d'acier à résistance ultra-élevée de la revendication 1, sachant qu'une teneur en carbone dans la zone de couche de surface de la tôle d'acier est de 0,12 % ou moins, à l'exclusion de 0 %.

3. La tôle d'acier à résistance ultra-élevée de la revendication 1, sachant que la tôle d'acier est une tôle d'acier laminée à froid ou une tôle d'acier galvanisée.

4. Procédé de fabrication d'une tôle d'acier à résistance ultra-élevée présentant une excellente aptitude au pliage de la revendication 1, le procédé comprenant :
le réchauffage d'une brame d'acier à une plage de température de 1100 à 1300 °C, la brame d'acier comprenant, en % de poids, 0,12 à 0,2 % de C, 0,5 % ou moins de Si, à l'exclusion de 0 %, 2,5 à 4,0 % de Mn, 0,03 % ou moins de P, à l'exclusion de 0 %, 0,015 % ou moins de S, à l'exclusion de 0 %, 0,1 % ou moins d'Al, à l'exclusion de 0 %, 1,0 % ou moins de Cr, à l'exclusion de 0 %, 0,01 % ou moins de N, à l'exclusion de 0 %, et un solde de Fe et d'impuretés inévitables ;
le laminage à chaud de finition de la brame d'acier réchauffée à une plage de température de Ar3 à 1000 °C et la fabrication d'une tôle d'acier laminée à chaud ;
le bobinage de la tôle d'acier laminée à chaud à 720 °C ou moins ;
le laminage à froid de la tôle d'acier laminée à chaud bobinée et la fabrication d'une tôle d'acier laminée à froid ;
l'exécution d'un traitement thermique de recuit sur la tôle d'acier laminée à froid à une plage de température de Ac3 à 900 °C et à une température de point de rosée de -10 à 30 °C ; et
le refroidissement de la tôle d'acier laminée à froid sur laquelle le traitement thermique de recuit est effectué à un taux de refroidissement de 100 °C/s ou moins, à l'exclusion de 0 °C/s,
sachant que la brame d'acier comprend en outre facultativement, en % de poids, un ou plusieurs éléments parmi 0,005 % ou moins de B, à l'exclusion de 0 %, 0,1 % ou moins de Mo, à l'exclusion de 0 %, 0,1 % ou moins de Ti, à l'exclusion de 0 %, 0,1 % ou moins de Nb, à l'exclusion de 0 %, 0,1 % ou moins de Zr, à l'exclusion de 0 %, et 0,1 % ou moins de V, à l'exclusion de 0 %,
sachant que la tôle d'acier présente un indice d'aptitude au pliage, R/t, de 4 ou moins, et sachant que la tôle d'acier présente une résistance à la traction de 1200 MPa ou plus.

5. Le procédé de la revendication 4, sachant que le bobinage est effectué à Ms ou plus.

6. Le procédé de la revendication 4, sachant que, pendant le traitement thermique de recuit, une décarburation a lieu dans une zone de couche de surface, une partie comprise dans 45 µm dans une direction d'épaisseur depuis une surface de la tôle d'acier laminée à froid, et après le traitement thermique de recuit, une teneur en carbone dans la zone de couche de surface de la tôle d'acier laminée à froid est de 0,12 % ou moins.

7. Le procédé de la revendication 4, sachant que le procédé comprend en outre la formation d'une couche galvanisée par immersion à chaud en immergeant la tôle d'acier laminée à froid dans un bain de placage au zinc après le refroidissement.
